# EUROPEAN PATENT APPLICATION

(11) **EP 4 848 374 A1**
(43) Date of publication of application: **02.12.2026**
(21) Application number: 25909919.0
(22) Date of filing: 18.06.2025
(51) Int. Cl.: H01M 4/58, H01M 4/62, H01M 4/136, H01M 4/1397, H01M 10/0525

(54) **CARBON CLOTH-SUPPORTED HETEROSTRUCTURED MATERIAL, AND PREPARATION METHOD THEREFOR AND USE THEREOF**

(30) Priority: 23.12.2024 CN 202411906439
(71) Applicant: Shanghai Xuanyi New Energy Development Co., Ltd, Shanghai 201806 (CN)
(72) Inventor: REN, Qiang, Shanghai 201806 (CN)
(74) Representative: Studio Torta S.p.A.
(86) International application number: PCT/CN2025/101819
(87) International publication number: WO 2026/137728

(57) **Abstract**

Provided is a carbon cloth-supported heterostructure material, a preparation method thereof, and an application thereof. The carbon cloth-supported heterostructure material includes a carbon cloth and a bimetallic sulfide salt supported on a surface of the carbon cloth. The carbon cloth has a carbon fiber conductive network, and the bimetallic sulfide salt is grown on a surface of the carbon fiber conductive network in a form of imbricated nanosheets to form a three-dimensional network structure. A metal in the bimetallic sulfide salt includes zinc. In the material of the present invention, the bimetallic sulfide salt is uniformly grown on the carbon fiber conductive network in the carbon cloth in the form of the imbricated nanosheets. The nanosheets are interconnected and intersected with each other to form the three-dimensional network structure, thereby introducing more active sites and improving conductivity, which helps to realize fast kinetics that avoids solid-state diffusion and promotes ion diffusion. The carbon cloth-supported heterostructure material of the present invention can significantly improve the rate performance, specific capacity, and cycling performance of a composite anode.

## Description

The present invention claims priority to Chinese Patent Application No. 2024119064390, filed on December 23, 2024, the invention of which is hereby incorporated by reference in its entirety.

### Technical Field

The present invention relates to the technical field of lithium-ion batteries, and specifically, to a carbon cloth-supported heterostructure material, a preparation method thereof, and an application thereof.

### Background

It is well known that graphite, as a main commercial anode in lithium-ion batteries, has poor layered structure stability. After long-term charge and discharge cycles, its structure is prone to collapse, resulting in a severe decrease in specific capacity and a significant shortening of energy storage lifespan. The development of new anode materials with high energy density has never stopped.

Inserting carbon-based anode materials (such as hard carbon) can relatively improve electrochemical performance. However, their output capacity is lower than 300 mAh·g⁻¹, which limits their practical application in lithium-ion batteries. As a potential electrode material, transition metal sulfides have higher theoretical specific capacities than intercalation-type carbonaceous materials based on a storage mechanism of multi-electron transfer. Compared with oxides, the transition metal sulfides generally have superior electronic conductivity and structural stability.

However, due to problems such as slow kinetics and volume changes during the lithiation/delithiation process, the cycling performance of the transition metal sulfides is still unsatisfactory. In order to alleviate the above problems, technicians have made great efforts. Combining the nanostructured transition metal sulfides with highly conductive scaffolds is considered a common and effective strategy, which can not only alleviate the structural changes caused by the insertion/extraction of Li⁺, but also improve electronic conductivity, thereby improving the electrochemical performance of the anode of lithium-ion batteries. However, the improvement in the rate performance, specific capacity, and cycling performance of the anode is still limited, making it difficult to achieve large-scale commercial application.

### Summary

A main object of the present invention is to provide a carbon cloth-supported heterostructure material, a preparation method thereof, and an application thereof, so as to solve the problems of poor rate performance, specific capacity, and cycling performance of an anode of a lithium-ion battery in the related art.

In order to achieve the above object, according to an aspect of the present invention, a carbon cloth-supported heterostructure material is provided, including a carbon cloth and a bimetallic sulfide salt supported on a surface of the carbon cloth. The carbon cloth has a carbon fiber conductive network, and the bimetallic sulfide salt is grown on a surface of the carbon fiber conductive network in a form of imbricated nanosheets to form a three-dimensional network structure. A metal in the bimetallic sulfide salt includes zinc. The carbon cloth-supported heterostructure material of the present invention can significantly improve the rate performance, specific capacity, and cycling performance of a composite anode.

Further, the bimetallic sulfide salt includes one or more of zinc nickel sulfide, zinc iron sulfide, zinc cobalt sulfide, and zinc aluminum sulfide. The above bimetallic sulfide salt has a higher theoretical capacity and can provide more active sites, thereby improving specific capacity.

Further, based on a weight percentage, the carbon cloth accounts for 85-88% of the carbon cloth-supported heterostructure material, and the bimetallic sulfide salt accounts for 12-15% of the carbon cloth-supported heterostructure material, so that a balance between conductivity and electrochemical activity can be better realized.

Further, a maximum length of a single imbricated nanosheet is 2-6 µm; and/or in the carbon fiber conductive network, a diameter of a carbon fiber is 5-7 µm. Based on the synergistic effect of the carbon fiber and the nanosheet of the above sizes, a more efficient three-dimensional conductive skeleton can be formed, transmission paths can be reduced, and a more stable electrochemical reaction can be maintained even under a high current density, resulting in significantly improved cycling stability.

According to another aspect of the present invention, a preparation method of the above carbon cloth-supported heterostructure material of the present invention is provided, including the following steps: at step S1, a carbon cloth is annealed to obtain a pre-treated carbon cloth; at step S2, a zinc salt, a second metal salt, urea, hexamethylenetetramine, and water are mixed to obtain a metal solution, and the pre-treated carbon cloth is immersed in the metal solution to perform a hydrothermal reaction to obtain a precursor; and at step S3, the precursor is immersed in an aqueous solution of a sulfide to perform a sulfidation reaction to obtain the carbon cloth-supported heterostructure material. The above preparation method is simple and easy to operate. A rich surface area of the nanosheets in the prepared carbon cloth-supported heterostructure material can provide more active sites for the electrochemical reaction, thereby significantly improving the rate performance, specific capacity, and cycling performance of a composite anode material.

Further, in the step S1, a temperature of the annealing is 350-450 °C, and a time of the annealing is 1.5-2.5 h. Preferably, before the annealing, the step S1 further includes a step of sequentially cleaning and drying the carbon cloth: the carbon cloth is ultrasonically cleaned using acetone for 50-70 min, and then ultrasonically cleaned using a mixture of ethanol and water for 50-70 min, and then dried at 70-90 °C until dry. Under the above conditions, a microstructure of the carbon cloth can be further optimized to enhance its conductivity and thermal stability. Meanwhile, the repair of surface defects is promoted to improve the electronic transmission efficiency and structural integrity of the material, which is beneficial to the rapid transmission and storage of lithium ions, thereby significantly improving the rate performance and the cycling performance.

Further, in the step S2, the zinc salt includes zinc nitrate hexahydrate, and the second metal salt includes nickel chloride hexahydrate, an iron chloride salt, a cobalt chloride salt, or an aluminum chloride salt. Preferably, a weight ratio of the zinc salt to the second metal salt is 1:(2-3); and/or a weight ratio of the urea to the hexamethylenetetramine is 1:(0.25-0.5); preferably, a weight ratio of the zinc salt to the urea is 1:(6-7); and/or a temperature of the hydrothermal reaction is 110-130 °C, and a time of the hydrothermal reaction is 5-7 h. Preferably, the step S2 further includes the following step: the precursor is cleaned using the mixture of ethanol and water for 50-70 min, and then dried at 70-90 °C until dry. The uniform deposition of the bimetallic sulfide salt can be better promoted to form a dense and stable nanostructure, thereby increasing active sites and optimizing the storage capacity of lithium ions, so as to improve the specific capacity.

Further, in the step S3, the sulfide includes one or more of sodium sulfide, sodium sulfide nonahydrate, and thiourea. Preferably, a weight ratio of a sum of weights of the zinc salt and the second metal salt to the sulfide is 1:(0.65-0.75); and/or a temperature of the sulfidation reaction is 150-170 °C, and a time of the sulfidation reaction is 5-7 h. Preferably, the step S3 further includes the following step: the carbon cloth-supported heterostructure material is cleaned using the mixture of ethanol and water for 50-70 min, and then dried at 70-90 °C until dry. The above conditions can further promote the complete conversion of the bimetallic sulfide salt in the sulfidation reaction to form a highly crystalline hetero-nanostructure with stable structure, thereby increasing storage sites of lithium ions and significantly improving the specific capacity.

According to another aspect of the present invention, an anode of a lithium-ion battery is provided, including the above carbon cloth-supported heterostructure material of the present invention. The anode of the present invention realizes comprehensive improvement of performance, and has high energy density, excellent cycling lifespan, and rapid charge and discharge capability.

According to another aspect of the present invention, a lithium-ion battery is provided, including the above anode of the lithium-ion battery of the present invention, and has significantly improved rate performance, specific capacity, and cycling performance.

By applying the technical solution of the present invention, the bimetallic sulfide salt is uniformly grown on the carbon fiber conductive network in the carbon cloth in the form of the imbricated nanosheets. The nanosheets are interconnected and intersected with each other to form the three-dimensional network structure. Rich void spaces between the nanosheets can promote electrolyte penetration and promote the lithiation of the anode. The imbricated nanosheets further introduce more active sites, and significant gaps between the nanosheets greatly increase the contact area between the material and the electrolyte, improve the conductivity, and can provide more active sites for the electrochemical reaction. The bimetallic sulfide salt can further combine the advantages of multi-components and multi-phases to produce abundant boundaries and small crystal domains, which helps to realize fast kinetics that avoids solid-state diffusion and promotes ion diffusion. The carbon cloth-supported heterostructure material of the present invention can significantly improve the rate performance, specific capacity, and cycling performance of a composite anode.

### Brief Description of the Drawings

The accompanying drawings, which constitute a part of the present invention, are used to provide a further understanding of the present invention. The illustrative examples of the present invention and descriptions thereof are used to explain the present invention and do not constitute an improper limitation of the present invention. In the drawings:
FIG. 1 shows a Scanning Electron Microscope (SEM) image (5 µm) of a carbon cloth-supported heterostructure material according to Example 1 of the present invention.
FIG. 2 shows an X-Ray Diffraction (XRD) pattern of the carbon cloth-supported heterostructure material according to Example 1 of the present invention.
FIG. 3 shows a cycling performance curve of the carbon cloth-supported heterostructure material according to Example 1 of the present invention.
FIG. 4 shows a structural diagram of a pouch cell according to Example 1 of the present invention.
FIG. 5 shows a cycling performance curve of the pouch cell according to Example 1 of the present invention.
FIG. 6 shows an SEM image (20 µm) of the carbon cloth-supported heterostructure material according to Example 1 of the present invention.

### Detailed Description of the Embodiments

It should be noted that, in the case of no conflict, the embodiments in the present invention and features in the embodiments can be combined with each other. The present invention will be described in detail below with reference to the accompanying drawings and in combination with the embodiments.

As described in the Background of the present invention, there are problems of poor rate performance, specific capacity, and cycling performance of an anode of a lithium-ion battery in the related art. In order to solve the above problems, in a typical embodiment of the present invention, a carbon cloth-supported heterostructure material is provided, including a carbon cloth and a bimetallic sulfide salt supported on a surface of the carbon cloth. The carbon cloth has a carbon fiber conductive network, and the bimetallic sulfide salt is grown on a surface of the carbon fiber conductive network in a form of imbricated nanosheets to form a three-dimensional network structure. A metal in the bimetallic sulfide salt includes zinc.

Here, "imbricated" means that the nanosheets formed by the bimetallic sulfide salt are orderly distributed on the surface of the carbon fiber conductive network, and each nanosheet partially covers an adjacent nanosheet.

A composite material of the present invention includes the carbon cloth having the carbon fiber conductive network as a base material. The bimetallic sulfide salt is uniformly grown on the carbon fiber conductive network in the form of imbricated nanosheets. The nanosheets are interconnected and intersected with each other to form a three-dimensional network structure. Sizes of the bimetallic sulfide salt and the carbon fiber conductive network are both at a micrometer level.

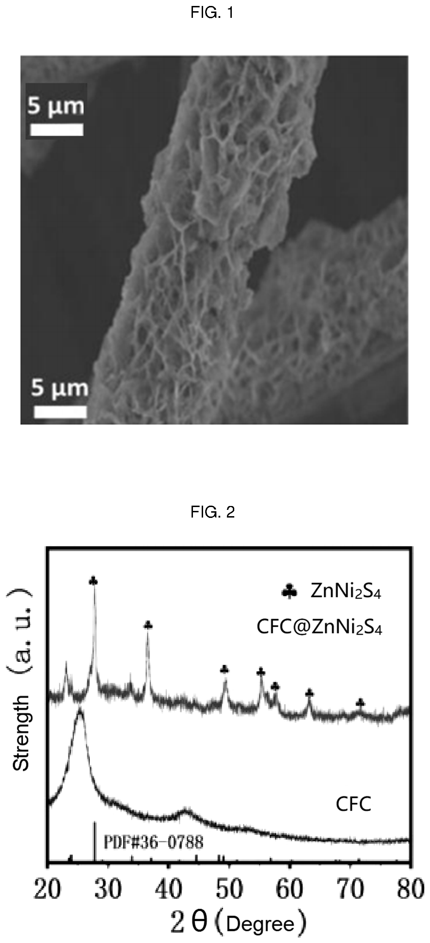

Taking use of zinc nickel sulfide (ZnNi₂S₄) as the bimetallic sulfide salt as an example, a loading mechanism of the present invention is as follows: a ZnNi-precursor is formed on a surface of a carbon fiber rod, and then the ZnNi-precursor is gradually aggregated to form a dense nanosheet layer. After sulfidation, the imbricated nanosheets of the bimetallic sulfide salt are grown on the carbon fiber conductive network. The material of the present invention has a three-dimensional(3D) foam nanosheet (flower) array of ZnNi₂S₄ supported on the carbon cloth conductive network, where the nanosheets are interconnected and intersected with each other to form the three-dimensional network structure, and voids can be clearly observed. An SEM image of the carbon cloth-supported heterostructure material of an example is shown in FIG. 1.

Specifically, the carbon cloth mainly provides a stable conductive base and a three-dimensional framework to promote the conduction of electrons and ensure high conductivity of the material, thereby significantly improving the rate performance. Rich void spaces between the nanosheets can promote electrolyte penetration and promote the lithiation of the anode. The imbricated nanosheets introduce more active sites, and significant gaps between the nanosheets greatly increase the contact area with the electrolyte, improve the conductivity, and can provide more active sites for the electrochemical reaction. Taking ZnNi₂S₄ as an example, the bimetallic sulfide salt generally has a spinel structure, where Zn and Ni are located at octahedral and tetrahedral positions respectively, combining the advantages of multi-components and multi-phases. The presence of these multi-phases in ZnNi₂S₄ produces abundant boundaries and small crystal domains, which helps to avoid solid-state diffusion and promote fast kinetics of ion diffusion.

Here, when a metal in the bimetallic sulfide salt includes zinc, it is more beneficial to form the imbricated nanosheets with specific morphologies to improve electrical performance and make the structure more stable. Furthermore, the metal zinc can be loaded on the surface of the carbon cloth in a form of a zinc-metal precursor during the formation process, and the nanosheets formed subsequently have a chemical connection with the carbon cloth. Compared with a conventional physical coating form, the chemical connection form can significantly enhance the connection strength between the bimetallic sulfide salt and the carbon cloth, making it less likely to fall off during use.

In addition, compared with a monometallic sulfide salt such as NiS and ZnS, the presence of Ni²⁺ and Zn²⁺ in the bimetallic sulfide salt such as ZnNi₂S₄ makes it have more redox reaction sites as well as a multi-electron reaction mechanism, and therefore it has higher electrochemical activity. In summary, the carbon cloth-supported heterostructure material of the present invention can significantly improve the rate performance, specific capacity, and cycling performance of the composite anode.

In a preferred embodiment, the bimetallic sulfide salt includes one or more of zinc nickel sulfide, zinc iron sulfide, zinc cobalt sulfide, and zinc aluminum sulfide. The above bimetallic sulfide salt has a higher theoretical capacity and can provide more active sites, thereby improving specific capacity. Meanwhile, a unique three-dimensional foam nano-flower structure formed thereof can further increase the contact area between the anode and the electrolyte, promote the rapid transmission of electrons and ions, and enhance the rate performance. Bimetallic elements can further optimize the electronic structure of the material, improve the electronic conductivity, reduce the polarization during the electrochemical reaction process, thereby enhancing the cycling stability and improving the performance consistency under long-term use. In addition, the above bimetallic sulfide salt is more conducive to the synergistic effect with the carbon cloth conductive network to further alleviate the volume expansion caused during the lithiation/delithiation process, thereby further enhancing the cycling performance.

In order to better realize the balance between conductivity and electrochemical activity, in a preferred embodiment, based on a weight percentage, the carbon cloth accounts for 85-88% of the carbon cloth-supported heterostructure material, and the bimetallic sulfide salt accounts for 12-15% of the carbon cloth-supported heterostructure material. The carbon fiber conductive network of the above content, as a base, can further improve the structural stability, better alleviate the stress caused by volume changes during the cycling process, and enhance the cycling performance. The remaining proportion of the bimetallic sulfide salt, as an active material, is more beneficial to improve the specific capacity of the composite anode, increase the active sites, and promote the rapid insertion and extraction of lithium ions based on its high theoretical capacity and multi-electron reaction characteristics, thereby finally further optimizing the rate performance and the cycling stability.

In a preferred embodiment, a maximum length of a single imbricated nanosheet is 2-6 µm; and/or in the carbon fiber conductive network, a diameter of a carbon fiber is 5-7 µm. The above tiny size of the nanosheet is more beneficial to increase the surface area, provide richer active sites, and accelerate the insertion and extraction of lithium ions, thereby significantly improving the specific capacity. Meanwhile, the carbon fiber at the micrometer level not only serves as the conductive network, but also can further promote the sufficient penetration of the electrolyte and the effective transmission of ions, thereby optimizing the rate performance. Based on the synergistic effect of the carbon fiber and the nanosheet of the above sizes, a more efficient three-dimensional conductive skeleton can be formed, transmission paths can be reduced, and a more stable electrochemical reaction can be maintained even under a high current density, resulting in significantly improved cycling stability.

In another typical embodiment of the present invention, a preparation method of the above carbon cloth-supported heterostructure material of the present invention is further provided, including the following steps: at step S1, a carbon cloth is annealed to obtain a pre-treated carbon cloth; at step S2, a zinc salt, a second metal salt, urea, hexamethylenetetramine, and water are mixed to obtain a metal solution, and the pre-treated carbon cloth is immersed in the metal solution to perform a hydrothermal reaction to obtain a precursor; and at step S3, the precursor is immersed in an aqueous solution of a sulfide to perform a sulfidation reaction to obtain the carbon cloth-supported heterostructure material.

The formation of the bimetallic sulfide salt nanosheet can be explained by the Kirkendall effect. Specifically, in the present invention, the carbon cloth is first annealed to generate oxygen-containing functional groups on the surface thereof and improve the hydrophilicity of the surface thereof to obtain the pre-treated carbon cloth. Then, the zinc salt, the second metal salt, the urea, the hexamethylenetetramine, and the water are mixed to obtain the metal solution, and the pre-treated carbon cloth is immersed in the metal solution and subjected to the hydrothermal reaction. Taking the ZnNi₂S₄ nanosheet as an example, the mechanism is that the urea is hydrolyzed to generate carbon dioxide, the carbon dioxide drives the metal ions to diffuse outward to form the ZnNi-precursor on the surface of the carbon fiber rod, and the ZnNi-precursor is gradually aggregated to form a dense nanosheet layer to obtain the precursor.

Finally, the precursor is immersed in the aqueous solution of the sulfide and subjected to the sulfidation reaction. High-temperature pyrolysis of the sulfide leads to the release of S²⁻ ions, and the S²⁻ ions react with the ZnNi-precursor to generate the corresponding ZnNi₂S₄, which well inherits the precursor morphology and coats on the carbon fiber like a physical barrier. As the reaction proceeds, since the diffusion rates of Zn²⁺ and Ni²⁺ are relatively faster than that of S²⁻, the growth rates of the nanosheets are different. Therefore, the ZnNi-precursor is gradually transformed into the foam-like ZnNi₂S₄ nanosheets, which makes the morphology of the ZnNi₂S₄ nanosheets highly representative, thereby obtaining the carbon cloth-supported heterostructure material. The above preparation method is simple and easy to operate. A rich surface area of the nanosheets in the prepared carbon cloth-supported heterostructure material can provide more active sites for the electrochemical reaction, thereby significantly improving the rate performance, specific capacity, and cycling performance of a composite anode material.

In a preferred embodiment, in the step S1, a temperature of the annealing is 350-450 °C, and a time of the annealing is 1.5-2.5 h. Before the annealing, the step S1 further includes a step of sequentially cleaning and drying the carbon cloth: the carbon cloth is ultrasonically cleaned using acetone for 50-70 min, and then ultrasonically cleaned using a mixture of ethanol and water for 50-70 min, and then dried at 70-90 °C until dry. The sequential cleaning using acetone and ethanol can effectively remove organic impurities and residues on the surface of the carbon cloth, improve the purity and surface activity of the material, provide a clean base for the subsequent uniform growth of the nanosheets, and promote good contact and combination between the active material and the conductive network. The annealing treatment under the above conditions can further optimize the microstructure of the carbon cloth, enhance its conductivity and thermal stability. Meanwhile, the repair of surface defects is promoted to improve the electronic transmission efficiency and structural integrity of the material, which is beneficial to the rapid transmission and storage of lithium ions, thereby significantly improving the rate performance and the cycling performance.

For the purpose of better promoting the uniform deposition of the bimetallic sulfide salt to form a dense and stable nanostructure, increase the active sites, and optimize the storage capacity of lithium ions, thereby improving the specific capacity, in a preferred embodiment, in the step S2, the zinc salt includes zinc nitrate hexahydrate, and the second metal salt includes nickel chloride hexahydrate, an iron chloride salt, a cobalt chloride salt, or an aluminum chloride salt. Preferably, a weight ratio of the zinc salt to the second metal salt is 1:(2-3); and/or a weight ratio of the urea to the hexamethylenetetramine is 1:(0.25-0.5); preferably, a weight ratio of the zinc salt to the urea is 1:(6-7); and/or a temperature of the hydrothermal reaction is 110-130 °C, and a time of the hydrothermal reaction is 5-7 h. Preferably, the step S2 further includes the following step: the precursor is cleaned using the mixture of ethanol and water for 50-70 min, and then dried at 70-90 °C until dry. When the ratio of the urea to the hexamethylenetetramine and the ratio of the urea to the zinc salt are within the above ranges, it is more beneficial to improve the rate and morphology of the growth of the precursor and the nanosheets, construct a more efficient lithium ion transmission channel, thereby enhancing the rate performance. The above hydrothermal reaction conditions are more beneficial to the high-quality formation of the nanostructure, improve the electronic conductivity and structural consistency of the material, thereby improving the cycling performance. The cleaning and drying steps can effectively remove by-products, reduce the negative impact of impurities on the electrochemical performance, and further improve the purity and reaction activity of the material.

In a preferred embodiment, in the step S3, the sulfide includes one or more of sodium sulfide, sodium sulfide nonahydrate, and thiourea. Preferably, a weight ratio of a sum of weights of the zinc salt and the second metal salt to the sulfide is 1:(0.65-0.75); and/or a temperature of the sulfidation reaction is 150-170 °C, and a time of the sulfidation reaction is 5-7 h. Preferably, the step S3 further includes the following step: the carbon cloth-supported heterostructure material is cleaned using the mixture of ethanol and water for 50-70 min, and then dried at 70-90 °C until dry. Within the above range of the material ratio, the complete conversion of the bimetallic sulfide salt in the sulfidation reaction can be further promoted to form a highly crystalline hetero-nanostructure with stable structure, thereby increasing storage sites of lithium ions and significantly improving the specific capacity. The above sulfidation reaction parameters can further improve the depth and uniformity of the sulfidation process, optimize the morphology and size of the nanostructure, construct a rapid ion transmission channel, and enhance the rate performance. In addition, the cleaning and drying treatment using ethanol and water can effectively remove residual reaction by-products, improve the surface cleanliness and reaction activity of the material, and reduce the polarization of the electrochemical reaction, thereby further improving the cycling performance.

In another typical embodiment of the present invention, an anode of a lithium-ion battery is further provided, including the above carbon cloth-supported heterostructure material of the present invention. In the above anode, the three-dimensional stable structure of the carbon cloth conductive network provides an efficient electron conduction path, which can significantly enhance the conductivity of the anode, increase the rate of the electrochemical reaction, and improve the rate performance of the battery. Secondly, the supported bimetallic sulfide nanosheets increase the electrochemical active sites, greatly improve the storage capacity of lithium ions, and thereby can improve the specific capacity of the battery. Moreover, the three-dimensional network structure with intersected nanosheets promotes the penetration of the electrolyte and the uniform diffusion of lithium ions, reduces the structural stress during the cycling process, and can greatly enhance the cycling stability of the material. Combining these advantages, the anode of the present invention realizes comprehensive improvement of performance, and has high energy density, excellent cycling lifespan, and rapid charge and discharge capability.

In another typical embodiment of the present invention, a lithium-ion battery is further provided, including the above anode of the lithium-ion battery of the present invention, and has significantly improved rate performance, specific capacity, and cycling performance.

The present invention is further described in detail below in conjunction with specific examples, and these examples cannot be understood as limiting the scope claimed by the present invention.

### Example 1

A carbon cloth-supported ZnNi₂S₄ material (CFC@ZnNi₂S₄) was provided. Based on a weight percentage, the carbon cloth accounted for 87% of the carbon cloth-supported heterostructure material, and the bimetallic sulfide salt accounted for 13%. The preparation method included the following steps.

At step S1, the carbon cloth was first ultrasonically cleaned using an organic solvent acetone for 60 min, and then ultrasonically cleaned using ethanol and deionized water for 60 min. The carbon cloth was put into a drying oven at 80 °C for drying. Finally, the dried carbon cloth was taken out and put into a muffle furnace to be annealed at 400 °C for 2 hours to obtain a pre-treated carbon cloth.

At step S2, 0.297 g of Zn(NO₃)₂·6H₂O, 0.713 g of NiCl₂·6H₂O, 2 g of urea, and 0.75 g of hexamethylenetetramine were dissolved in a reaction kettle containing 75 mL of deionized water. The pre-treated carbon cloth was immersed in the above reaction kettle, the reaction kettle was started for heating, the temperature was set to 120 °C, and the temperature was maintained for 6 hours. After cooling, the carbon cloth was taken out from the reaction kettle, and was cleaned using ethanol and deionized water to remove residual chemical reagents on the surface of the carbon cloth. Finally, the carbon cloth was put into a vacuum drying oven at 80 °C until completely dried to obtain a precursor.

At step S3, 0.72 g of sodium sulfide was dissolved in a reaction kettle containing 75 mL of deionized water, and the precursor was put in again. The reaction kettle was started for heating, the temperature was set to 160 °C, and the temperature was maintained for 6 hours. After cooling, the carbon cloth sample subjected to the hydrothermal reaction treatment was taken out, and was cleaned using ethanol and deionized water to remove residual chemical reagents on the surface of the carbon cloth. Finally, the carbon cloth was put into a vacuum drying oven at 80 °C until completely dried to obtain the carbon cloth-supported heterostructure material.

### Example 2

The difference from Example 1 was that a carbon cloth-supported ZnFe₂S₄ material (CFC@ZnFe₂S₄) was provided. At step S2, 0.297 g of Zn(NO₃)₂·6H₂O, 0.784 g of FeCl₂·6H₂Og, 2 g of urea, and 0.75 g of hexamethylenetetramine were dissolved in a reaction kettle containing 75 mL of deionized water. The pre-treated carbon cloth was immersed in the above reaction kettle, the reaction kettle was started for heating, the temperature was set to 120 °C, and the temperature was maintained for 6 hours. After cooling, the carbon cloth was taken out from the reaction kettle, and was cleaned using ethanol and deionized water to remove residual chemical reagents on the surface of the carbon cloth. Finally, the carbon cloth was put into a vacuum drying oven at 80 °C until completely dried to obtain a precursor.

### Example 3

The difference from Example 1 was that a carbon cloth-supported ZnCo₂S₄ material (CFC@ZnCo₂S₄) was provided. At step S2, 0.297 g of Zn(NO₃)₂·6H₂O, 0.689 g of CoCl₂·6H₂Og, 2 g of urea, and 0.75 g of hexamethylenetetramine were dissolved in a reaction kettle containing 75 mL of deionized water. The pre-treated carbon cloth was immersed in the above reaction kettle, the reaction kettle was started for heating, the temperature was set to 120 °C, and the temperature was maintained for 6 hours. After cooling, the carbon cloth was taken out from the reaction kettle, and was cleaned using ethanol and deionized water to remove residual chemical reagents on the surface of the carbon cloth. Finally, the carbon cloth was put into a vacuum drying oven at 80 °C until completely dried to obtain a precursor.

### Example 4

The difference from Example 1 was that a carbon cloth-supported ZnAl₂S₄ material (CFC@ZnAl₂S₄) was provided. At step S2, 0.297 g of Zn(NO₃)₂·6H₂O, 0.438 g of AlCl₃·6H₂Og, 2 g of urea, and 0.75 g of hexamethylenetetramine were dissolved in a reaction kettle containing 75 mL of deionized water. The pre-treated carbon cloth was immersed in the above reaction kettle, the reaction kettle was started for heating, the temperature was set to 120 °C, and the temperature was maintained for 6 hours. After cooling, the carbon cloth was taken out from the reaction kettle, and was cleaned using ethanol and deionized water to remove residual chemical reagents on the surface of the carbon cloth. Finally, the carbon cloth was put into a vacuum drying oven at 80 °C until completely dried to obtain a precursor.

### Example 5

The difference from Example 1 was that, at step S1: the carbon cloth was first ultrasonically cleaned using an organic solvent acetone for 50 min, and then ultrasonically cleaned using ethanol and deionized water for 50 min. The carbon cloth was put into a drying oven at 70 °C for drying. Finally, the dried carbon cloth was taken out and put into a muffle furnace to be annealed at 350 °C for 2.5 hours to obtain a pre-treated carbon cloth.

### Example 6

The difference from Example 1 was that, at step S1: the carbon cloth was first ultrasonically cleaned using an organic solvent acetone for 70 min, and then ultrasonically cleaned using ethanol and deionized water for 70 min. The carbon cloth was put into a drying oven at 90 °C for drying. Finally, the dried carbon cloth was taken out and put into a muffle furnace to be annealed at 450 °C for 1.5 hours to obtain a pre-treated carbon cloth.

### Example 7

The difference from Example 1 was that, at step S2: 0.297 g of Zn(NO₃)₂·6H₂O, 0.594 g of NiCl₂·6H₂O, 1.78 g of urea, and 0.89 g of hexamethylenetetramine were dissolved in a reaction kettle containing 75 mL of deionized water. The pre-treated carbon cloth was immersed in the above reaction kettle, the reaction kettle was started for heating, the temperature was set to 110 °C, and the temperature was maintained for 7 hours. After cooling, the carbon cloth was taken out from the reaction kettle, and was cleaned using ethanol and deionized water to remove residual chemical reagents on the surface of the carbon cloth. Finally, the carbon cloth was put into a vacuum drying oven at 70 °C until completely dried to obtain a precursor.

### Example 8

The difference from Example 1 was that, at step S2: 0.297 g of Zn(NO₃)₂·6H₂O, 0.861g of NiCl₂·6H₂O, 2.08g of urea, and 0.52g of hexamethylenetetramine were dissolved in a reaction kettle containing 75 mL of deionized water. The pre-treated carbon cloth was immersed in the above reaction kettle, the reaction kettle was started for heating, the temperature was set to 130 °C, and the temperature was maintained for 5 hours. After cooling, the carbon cloth was taken out from the reaction kettle, and was cleaned using ethanol and deionized water to remove residual chemical reagents on the surface of the carbon cloth. Finally, the carbon cloth was put into a vacuum drying oven at 90 °C until completely dried to obtain a precursor.

### Example 9

The difference from Example 1 was that, at step S3: 0.66 g of sodium sulfide was dissolved in a reaction kettle containing 75 mL of deionized water, and the precursor was put in again. The reaction kettle was started for heating, the temperature was set to 150 °C, and the temperature was maintained for 7 hours. After cooling, the carbon cloth sample subjected to the hydrothermal reaction treatment was taken out, and was cleaned using ethanol and deionized water to remove residual chemical reagents on the surface of the carbon cloth. Finally, the carbon cloth was put into a vacuum drying oven at 70 °C until completely dried to obtain the carbon cloth-supported heterostructure material.

### Example 10

The difference from Example 1 was that, at step S3: 0.76g of sodium sulfide was dissolved in a reaction kettle containing 75 mL of deionized water, and the precursor was put in again. The reaction kettle was started for heating, the temperature was set to 170 °C, and the temperature was maintained for 5 hours. After cooling, the carbon cloth sample subjected to the hydrothermal reaction treatment was taken out, and was cleaned using ethanol and deionized water to remove residual chemical reagents on the surface of the carbon cloth. Finally, the carbon cloth was put into a vacuum drying oven at 90 °C until completely dried to obtain the carbon cloth-supported heterostructure material.

### Example 11

The difference from Example 1 was that, based on a weight percentage, the carbon cloth accounted for 85% of the carbon cloth-supported heterostructure material, and the bimetallic sulfide salt accounted for 15%.

### Example 12

The difference from Example 1 was that, based on a weight percentage, the carbon cloth accounted for 88% of the carbon cloth-supported heterostructure material, and the bimetallic sulfide salt accounted for 12%.

### Comparative example 1

The difference from Example 1 was that NiS was supported on the surface of the carbon cloth.

### Comparative example 2

The difference from Example 1 was that ZnS was supported on the surface of the carbon cloth.

### Comparative example 3

The difference from Example 1 was that a one-step hydrothermal method was used in the step S2: 0.297 g of Zn(NO₃)₂·6H₂O, 0.713 g of NiCl₂·6H₂O, 0.72 g of sodium sulfide, 2 g of urea, and 0.75 g of hexamethylenetetramine were dissolved in a reaction kettle containing 150 mL of deionized water. The pre-treated carbon cloth was immersed in the above reaction kettle, the reaction kettle was started for heating, the temperature was set to 160 °C, and the temperature was maintained for 6 hours. After cooling, the carbon cloth sample subjected to the hydrothermal reaction treatment was taken out, and was cleaned using ethanol and deionized water to remove residual chemical reagents on the surface of the carbon cloth. Finally, the carbon cloth was put into a vacuum drying oven at 80 °C until completely dried to obtain the carbon cloth-supported heterostructure material.

### Performance testing:

The materials prepared in the above examples and comparative examples were applied to an anode of a flexible lithium-ion battery for performance testing. The results were shown in Table 1.

### [Carbon cloth-supported heterostructure material]

Maximum length of a single imbricated nanosheet and diameter of a carbon fiber in the carbon fiber conductive network: by an electron microscope.

Proportion of the carbon cloth and proportion of the metal sulfide salt: the weights of the pre-treated carbon cloth and the carbon cloth-supported heterostructure material were weighed respectively. The proportion of the carbon cloth = the weight of the pre-treated carbon cloth ÷ the weight of the carbon cloth-supported heterostructure material × 100%. The proportion of the metal sulfide salt = (the weight of the carbon cloth-supported heterostructure material - the weight of the pre-treated carbon cloth) ÷ the weight of the carbon cloth-supported heterostructure material × 100%.

### [Coin cell]

Assembly of the lithium-ion battery: a CR2032 coin cell was used to perform the electrochemical test of the carbon cloth-supported heterostructure material. The prepared material was directly used as a working electrode, and a lithium foil (lithium sheet) was used as a counter electrode. The two electrodes were cut into discs with a diameter of 1.2 cm, and the loading amount of ZnNi₂S₄ on the carbon fiber conductive network was 0.1 g. Celgard 2400 was used as a separator, and 1 M LiPF₆ in Ethylene Carbonate (EC)/DiEthyl Carbonate (DEC)/DiMethyl Carbonate (DMC) (volume ratio of 1:1:1) was used as an electrolyte. The battery was assembled in a glove box filled with argon, where the contents of H₂O and O₂ were maintained below 0.1 ppm.

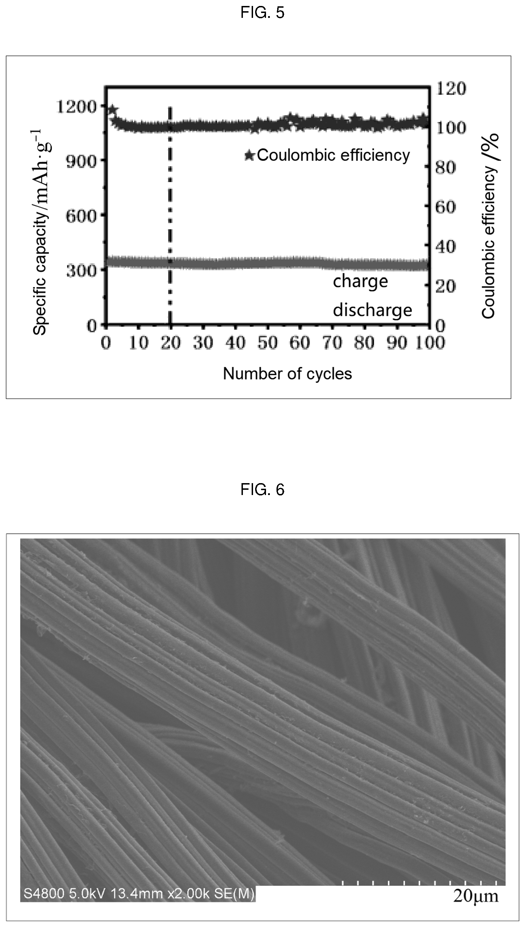

An SEM image (5 µm) of the carbon cloth-supported heterostructure material of Example 1 was shown in FIG. 1, an SEM image (20 µm) was shown in FIG. 6, and an XRD diffraction pattern was shown in FIG. 2. As could be seen from FIG. 1, the carbon fiber rods were covered with imbricated ZnNi₂S₄ nanosheets. The nanosheets were interconnected and intersected with each other to form a three-dimensional network structure. As could be seen from FIG. 2, diffraction peaks of the sample were consistent with the corresponding JCPDS card, and the JCPDS card for ZnNi₂S₄ was 36-0788. Five apparent diffraction peaks of the sample ZnNi₂S₄ were located at 27.3°, 35.7°, 54°, 56.4°, and 63.8°, which corresponded to five crystal planes of (110), (101), (211), (220), and (310) respectively. The diffraction peaks of ZnNi₂S₄ showed characteristics of low intensity and broadening, indicating that the synthesized ZnNi₂S₄ had poor crystallinity and a nanometer-level size. The sample CFC@ZnNi₂S₄ had two broad peaks at 25.4° and 43.2°. This was because the sample contained the carbon cloth (CFC), which was consistent with the XRD pattern of pure CFC. No diffraction peaks of other materials except the carbon cloth substrate were detected by XRD, indicating that the synthesized ZnNi₂S₄ had high purity.

On the contrary, the materials prepared in Comparative examples 1 to 3 were relatively loose, irregular in shape, and unevenly distributed, which were prone to falling off during the cycling process, resulting in poor cycling performance.

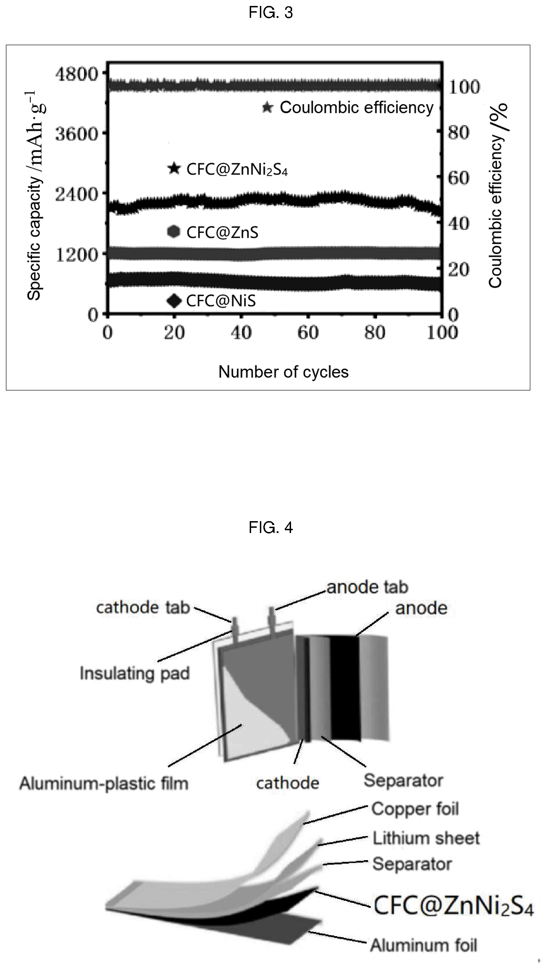

The specific capacity test results of the carbon cloth-supported heterostructure material of Example 1 were shown in Table 1, and the cycling performance curve was shown in FIG. 3. It could be found that the electrode CFC@ZnNi₂S₄ still had a high discharge specific capacity of 2026.2 mAh·g⁻¹ after 100 cycles at a current density of 0.1 A·g⁻¹, and the capacity retention rate was 98.24%, exhibiting better specific capacity and capacity retention rate. Compared with the monometallic sulfide salts NiS and ZnS, the bimetallic sulfide salt supported in the present invention was more beneficial to the improvement of the cycling performance.

### [Pouch cell]

The pouch cell was assembled according to the materials and steps of the CR2032 coin cell to perform the overall electrochemical test of the battery.

The structural diagram of the CFC@ZnNi₂S₄||Li foil pouch cell of Example 1 was shown in FIG. 4, where the CFC@ZnNi₂S₄ was used as an anode, and a lithium foil/lithium sheet (Li foil) was used as a cathode.

The capacity retention rate of the pouch cell of Example 1 after 100 cycles at a current density of 0.5 A·g⁻¹ was shown in Table 1, and the cycling performance curve was shown in FIG. 5. From the cycling data, it could be seen that the pouch cell still had a discharge specific capacity of 322.60 mAh·g⁻¹ after 100 cycles, and the capacity retention rate was 94.13%. This indicated that the pouch cell had excellent cycling lifespan and capacity retention rate, and could meet the needs of long-term use. In addition, the coulombic efficiency of the pouch cell was close to 100%, indicating good reversibility of the pouch cell.

**Table 1**

| | Carbon cloth-supported heterostructure material | | | | | | Pouch cell |
|---|---|---|---|---|---|---|---|
| / | / | Proportion of carbon cloth | Proportion of bimet allic sulfide salt | Maximum length of a single imbricated nanoshe et/µm | Diameter of carbon fiber in carbon fiber conductive network/µm | Specific capacit y/mAh· g⁻¹ | Capacity retention rate after 100 cycles at 0.5 A·g⁻¹ |
| Example 1 | CFC@ZnNi₂S₄ | 86 | 14 | 3.0 | 6 | 2434 | 94.13% |
| Example 2 | CFC@ZnFe₂S₄ | 88 | 12 | 2.3 | 6 | 784 | 93.49% |
| Example 3 | CFC@ZnCo₂S₄ | 87.7 | 12.3 | 2.7 | 6 | 759 | 93.64% |
| Example 4 | CFC@ZnAl₂S₄ | 87.1 | 12.9 | 3.5 | 6 | 734 | 92.97% |
| Example 5 | CFC@ZnNi₂S₄ | 85 | 15 | 4.5 | 6 | 2389 | 88.98% |
| Example 6 | CFC@ZnNi₂S₄ | 86.2 | 13.8 | 3.4 | 6 | 2357 | 85.94% |
| Example 7 | CFC@ZnNi₂S₄ | 85.8 | 14.2 | 5.6 | 6 | 2363 | 89.18% |
| Example 8 | CFC@ZnNi₂S₄ | 86 | 14 | 3.3 | 6 | 2359 | 87.64% |
| Example 9 | CFC@ZnNi₂S₄ | 86.7 | 13.3 | 4.6 | 6 | 2328 | 86.75% |
| Example 10 | CFC@ZnNi₂S₄ | 85.2 | 14.8 | 2.8 | 6 | 2367 | 87.69% |
| Example 11 | CFC@ZnNi₂S₄ | 87 | 13 | 5.0 | 6 | 2345 | 88.51 % |
| Example 12 | CFC@ZnNi₂S₄ | 85.1 | 14.9 | 3.3 | 6 | 2368 | 89.24% |
| Comparative example 1 | NiS is supported on surface of carbon cloth | / | / | / | 6 | 590 | 78.35% |
| Comparative example 2 | ZnS is supported on surface of carbon cloth | / | / | / | 6 | 962.3 | 80.68% |
| Comparative example 3 | / | / | / | / | 6 | 2154 | 79.60% |

As can be seen from the above, compared with the comparative examples, in the examples of the present invention, the bimetallic sulfide salt is uniformly grown on the carbon fiber conductive network in the carbon cloth in the form of the imbricated nanosheets. The nanosheets are interconnected and intersected with each other to form the three-dimensional network structure. Rich void spaces between the nanosheets can promote electrolyte penetration and promote the lithiation of the anode. The imbricated nanosheets further introduce more active sites, and significant gaps between the nanosheets greatly increase the contact area between the material and the electrolyte, improve the conductivity, and can provide more active sites for the electrochemical reaction. The bimetallic sulfide salt can further combine the advantages of multi-components and multi-phases to produce abundant boundaries and small crystal domains, which helps to realize fast kinetics that avoids solid-state diffusion and promotes ion diffusion. The carbon cloth-supported heterostructure material of the present invention can significantly improve the rate performance, specific capacity, and cycling performance of a composite anode.

In addition, it can be seen that when each process parameter is within the preferred range of the present invention, the comprehensive effect is better.

The above descriptions are only preferred examples of the present invention, and are not intended to limit the present invention. For those skilled in the art, the present invention can have various modifications and changes. Any modifications, equivalent substitutions, improvements, etc. made within the spirit and principles of the present invention shall be contained in the protection scope of the present invention.

## Claims

1. A carbon cloth-supported heterostructure material, comprising a carbon cloth and a bimetallic sulfide salt supported on a surface of the carbon cloth, wherein
the carbon cloth has a carbon fiber conductive network, and the bimetallic sulfide salt is grown on a surface of the carbon fiber conductive network in a form of imbricated nanosheets to form a three-dimensional network structure; wherein
a metal in the bimetallic sulfide salt comprises zinc.

2. The carbon cloth-supported heterostructure material according to claim 1, wherein the bimetallic sulfide salt comprises one or more of zinc nickel sulfide, zinc iron sulfide, zinc cobalt sulfide, and zinc aluminum sulfide.

3. The carbon cloth-supported heterostructure material according to claim 1 or 2, wherein, based on a weight percentage, the carbon cloth accounts for 85-88% of the carbon cloth-supported heterostructure material, and the bimetallic sulfide salt accounts for 12-15% of the carbon cloth-supported heterostructure material.

4. The carbon cloth-supported heterostructure material according to any one of claims 1 to 3, wherein
a maximum length of a single imbricated nanosheet is 2-6 µm; and/or
in the carbon fiber conductive network, a diameter of a carbon fiber is 5-7 µm.

5. A preparation method of the carbon cloth-supported heterostructure material according to any one of claims 1 to 4, comprising the following steps:
step S1, annealing a carbon cloth to obtain a pre-treated carbon cloth;
step S2, mixing a zinc salt, a second metal salt, urea, hexamethylenetetramine, and water to obtain a metal solution; immersing the pre-treated carbon cloth in the metal solution to perform a hydrothermal reaction to obtain a precursor; and
step S3, immersing the precursor in an aqueous solution of a sulfide to perform a sulfidation reaction to obtain the carbon cloth-supported heterostructure material.

6. The preparation method according to claim 5, wherein in the step S1,
a temperature of the annealing is 350-450 °C, and a time of the annealing is 1.5-2.5 h; and preferably, before the annealing, the step S1 further comprises a step of sequentially cleaning and drying the carbon cloth: the carbon cloth is ultrasonically cleaned using acetone for 50-70 min, and then ultrasonically cleaned using a mixture of ethanol and water for 50-70 min, and then dried at 70-90 °C until dry.

7. The preparation method according to claim 5 or 6, wherein in the step S2,
the zinc salt comprises zinc nitrate hexahydrate, and the second metal salt comprises nickel chloride hexahydrate, an iron chloride salt, a cobalt chloride salt, or an aluminum chloride salt; preferably, a weight ratio of the zinc salt to the second metal salt is 1:(2-3); and/or
a weight ratio of the urea to the hexamethylenetetramine is 1:(0.25-0.5); preferably, a weight ratio of the zinc salt to the urea is 1:(6-7); and/or
a temperature of the hydrothermal reaction is 110-130 °C, and a time of the hydrothermal reaction is 5-7 h; and
preferably, the step S2 further comprises the following step: cleaning the precursor using the mixture of ethanol and water for 50-70 min, and then drying at 70-90 °C until dry.

8. The preparation method according to any one of claims 5 to 7, wherein in the step S3,
the sulfide comprises one or more of sodium sulfide, sodium sulfide nonahydrate, and thiourea; preferably, a weight ratio of a sum of weights of the zinc salt and the second metal salt to the sulfide is 1:(0.65-0.75); and/or
a temperature of the sulfidation reaction is 150-170 °C, and a time of the sulfidation reaction is 5-7 h; and
preferably, the step S3 further comprises the following step: cleaning the carbon cloth-supported heterostructure material using the mixture of ethanol and water for 50-70 min, and then drying at 70-90 °C until dry.

9. An anode of a lithium-ion battery, comprising the carbon cloth-supported heterostructure material according to any one of claims 1 to 4.

10. A lithium-ion battery, comprising the anode of a lithium-ion battery according to claim 9.
